# EUROPEAN PATENT APPLICATION

(11) **EP 4 567 710 A1**
(43) Date of publication of application: **11.06.2025**
(21) Application number: 23849913.1
(22) Date of filing: 20.07.2023
(51) Int. Cl.: G06Q 50/08

(54) **CONSTRUCTION RECORD MANAGEMENT SYSTEM, MANAGEMENT SYSTEM, CONSTRUCTION RECORD MANAGEMENT METHOD, AND PROGRAM**

(30) Priority: 03.08.2022 JP 2022124259
(71) Applicant: Panasonic Holdings Corporation, Osaka, 571-8501 (JP)
(72) Inventor: NAKAMURA, Atsushi, Kadoma-shi, Osaka 571-0057 (JP); HASHIMOTO, Koichi, Kadoma-shi, Osaka 571-0057 (JP)
(74) Representative: Müller-Boré & Partner Patentanwälte PartG mbB
(86) International application number: PCT/JP2023/026589
(87) International publication number: WO 2024/029358

(57) **Abstract**

It is an object of the present disclosure to provide an installation record management system, a management system, an installation record management method, and a program which are configured to manage the manufacturing number and an installation status of an item used in an installation task at a construction site. An installation record management system (30) includes a first acquisition unit (34), a second acquisition unit (35), and a storage. An item management system (10) is configured to manage inventory statuses of a plurality of types of items used in a plurality of installation tasks at a construction site. The first acquisition unit (34) is configured to acquire, from the item management system (10), a piece of item information at least including a manufacturing number of an item which is included in the plurality of types of items and which is to be shipped to the construction site. The second acquisition unit (35) is configured to acquire a piece of installation information on an installation status, at the construction site, of the item shipped to the construction site. The storage is configured to store the piece of item information acquired by the first acquisition unit (34) and the piece of installation information acquired by the second acquisition unit (35) such that the piece of item information and the piece of installation information correspond to each other.

## Description

### Technical Field

The present disclosure relates to installation record management systems, management systems, installation record management methods, and programs. More specifically, the present disclosure relates to an installation record management system, a management system, an installation record management method, and a program which are configured to manage installation information on installation tasks at a construction site.

### Background Art

Patent Literature 1 discloses a building site management system. The building site management system includes: IC tags configured to be attached to respective elements, such as items present at a building site, tools, and workers; IC tag readers configured to read tag IDs from the IC tags; and a management server configured to communicate with the IC tag readers. The IC tag readers are attached in respective spaces at the building site and at exits/entrances of the respective spaces. The management server is configured to: receive the tag IDs from the IC tag readers and space IDs of the respective spaces where the IC tag readers are installed; and manage the date and time of entry/exit of each element into/from each of the respective spaces on the basis of a corresponding one of the tag IDs, a corresponding one of the space IDs, and a timing of reading the corresponding one of the tag IDs. The management server is configured to manage the state of a task at each of the spaces on the basis of the date and time of the entry/exit of each element into/from the corresponding one of the respective spaces.

The building site management system can manage the entry/exit of each element into/from the space in which the IC tag reader has been attached. However, the building site management system cannot confirm the manufacturing number of an item installed in the space (a construction site) after the installation.

### Citation List

### Patent Literature

Patent Literature 1: JP 2005-326965 A

### Summary of Invention

It is an object of the present disclosure to provide an installation record management system, a management system, an installation record management method, and a program which are configured to manage the manufacturing number and an installation status of an item used in an installation task at a construction site.

An installation record management system of an aspect of the present disclosure includes a first acquisition unit, a second acquisition unit, and a storage. An item management system is configured to manage inventory statuses of a plurality of types of items used in a plurality of installation tasks at a construction site. The first acquisition unit is configured to acquire, from the item management system, a piece of item information at least including a manufacturing number of an item which is included in the plurality of types of items and which is to be shipped to the construction site. The second acquisition unit is configured to acquire a piece of installation information on an installation status, at the construction site, of the item shipped to the construction site. The storage is configured to store the piece of item information acquired by the first acquisition unit and the piece of installation information acquired by the second acquisition unit such that the piece of item information and the piece of installation information correspond to each other.

A management system of an aspect of the present disclosure includes the installation record management system, and a progress management system configured to manage a state of progress in the plurality of installation tasks at the construction site. The installation record management system is configured to, upon completion of an installation task of the plurality of installation tasks which is for the item shipped to the construction site, transmit, to the progress management system, the piece of item information and the piece of installation information on the item for which the installation task has been completed. The progress management system is configured to record the piece of item information and the piece of installation information received from the installation record management system such that the piece of item information and the piece of installation information correspond to each other.

An installation record management method of an aspect of the present disclosure includes a first acquisition process, a second acquisition process, and a storage process. An item management system is configured to manage inventory statuses of a plurality of types of items used in a plurality of installation tasks at a construction site. The first acquisition process includes acquiring, from the item management system, a piece of item information at least including a manufacturing number of an item which is included in the plurality of types of items and which is to be shipped to the construction site. The second acquisition process includes acquiring a piece of installation information on an installation status of the item shipped to the construction site. The storage process includes storing the piece of item information acquired in the first acquisition process and the piece of installation information acquired in the second acquisition process such that the piece of item information and the piece of installation information correspond to each other.

A program of an aspect of the present disclosure is program configured to cause a computer system to execute the installation record management method.

### Brief Description of Drawings

FIG. 1 is a schematic system configuration diagram of a management system including an installation record management system according to an embodiment of the present disclosure;
FIG. 2 is a sequence diagram illustrating operation of the management system.

### Description of Embodiments

### (Embodiment)

### (1) Overview

An installation record management system 30 according to an embodiment of the present disclosure will be described in detail below with reference to the drawings.

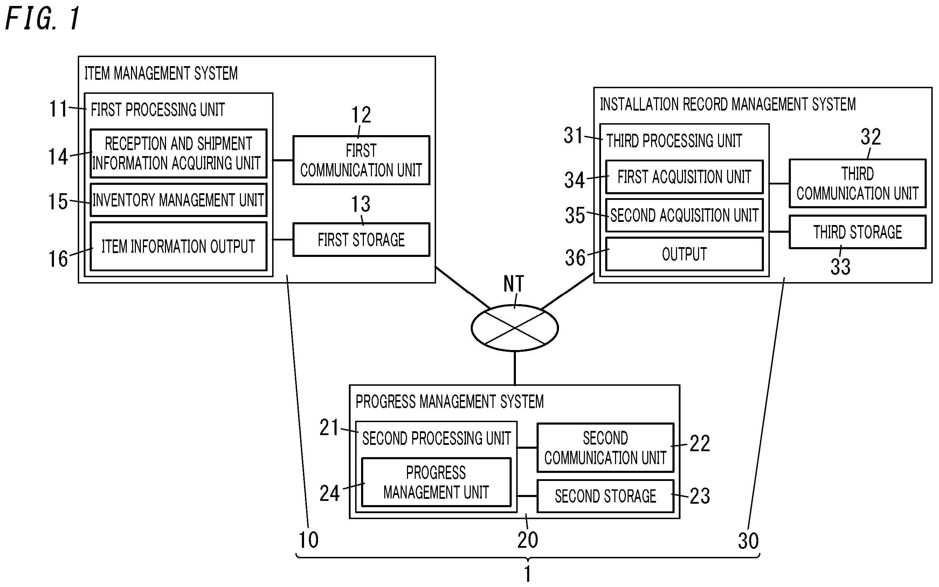

As shown in FIG. 1, the installation record management system 30 includes a first acquisition unit 34, a second acquisition unit 35, and a storage (a third storage 33).

The first acquisition unit 34 acquires, from an item management system 10 configured to manage inventory statuses of a plurality of types of items used in a plurality of installation tasks at a construction site, a piece of item information at least including a manufacturing number of an item which is included in the plurality of types of items and which is to be shipped to the construction site.

The second acquisition unit 35 acquires a piece of installation information on an installation status, at the construction site, of the item shipped to the construction site.

The storage (the third storage 33) stores the piece of item information acquired by the first acquisition unit 34 and the piece of installation information acquired by the second acquisition unit 35 such that the piece of item information and the piece of installation information correspond to each other.

As used herein, the "construction site" is a site where, for example, a dwelling or non-dwelling building is newly constructed or is remodeled. Examples of work performed at the construction site include carpentry, utility work, pipe laying work, power distribution work, electrical work, painting work, and interior decoration work. **In** the present embodiment is described an example in which the work performed at the construction site is the electrical work. When the work performed at the construction site is the electrical work, the plurality of installation tasks performed at the construction site can include the task of installing electrical facilities such as wiring devices, distribution boards, lighting fixtures, and ventilator facilities. Thus, the plurality of items used in the plurality of installation tasks can include, in addition to the wiring devices, the distribution boards, the lighting fixtures, and the ventilator facilities to be installed at the construction site, auxiliary item, such as electric wires and attachment screws, used for installation of the electrical facilities.

In the present embodiment, a constructor which performs installation tasks at the construction site orders items used in the installation tasks from a manufacturer or a supplier according to the state of progress in the installation tasks at the construction site such that the items are delivered to an item storage area different from the construction site to accumulate the items necessary in the installation tasks before the tasks are performed. Then, the constructor ships one of the items received in the item storage area to the construction site at a timing at which one of the installation tasks which is for the item is performed, and the conductor performs the installation task for the item at the construction site. Note that the item storage area may be provided for each of construction sites, or one item storage area may be provided for a plurality of construction sites. Moreover, for one construction site, a plurality of item storage areas may be provided.

Here, the item management system 10 is a system that manages the inventory of the plurality of items (e.g., the electrical facilities and the auxiliary items) used in the plurality of installation tasks. The item management system 10 at least manages, for example, respective reception statuses of items in the item storage area and respective shipment statuses of items from the item storage area to the construction site.

Pieces of item information which the first acquisition unit 34 acquires from the item management system 10 are pieces of information each identifying a corresponding one of the plurality of items. Each piece of item information can at least include the manufacturing number of the corresponding one of the items. The manufacturing number of an item is an individual number assigned to the item by, for example, a manufacturer of the item. Note that the first acquisition unit 34 may acquire each piece of item information directly from the item management system 10 or via another system (e.g., a progress management system 20).

Moreover, pieces of installation information which the second acquisition unit 35 acquires are pieces of information each on the installation status of a corresponding one of the items at the construction site. Each piece of installation information can include, for example, a piece of information representing whether or not the installation task for the corresponding one of the items has been performed at the construction site. Each piece of installation information may further include a piece of information on task contents of the installation task for the corresponding one of the items at the construction site.

The storage (the third storage 33) stores, for the items used in the installation tasks at the construction site, the pieces of item information including the manufacturing numbers of the items and the pieces of installation information on the items such that the pieces of item information correspond to the pieces of installation information. Therefore, when a manufacturing failure or the like is found in an item after the installation of the item, the installation status of the item having the manufacturing failure can be grasped based on the pieces of item information and the pieces of installation information stored in the storage (the third storage 33) of the installation record management system 30. This provides a user of the installation record management system 30 with the advantages that the user can check the installation status, at the construction site, of the item having the manufacturing failure or the like, and that the user can take an action to, for example, replace the item if the item has been installed at the construction site.

### (2) Details

FIG. 1 is a schematic system configuration diagram of a management system 1 including the installation record management system 30.

The management system 1 includes the installation record management system 30 and the progress management system 20 which manages the state of progress in the plurality of installation tasks at the construction site. Upon completion of the installation task for the item shipped to the construction site, the installation record management system 30 transmits, to the progress management system 20, the piece of item information and the piece of installation information on the item for which the installation task has been completed. The progress management system 20 stores the piece of item information and the piece of installation information received from the installation record management system 30 such that the piece of item information and the piece of installation information correspond to each other. Thus, the installation record management system 30 and the progress management system 20 can share the piece of item information and the piece of installation information on the item for which the installation task has been completed.

The management system 1 further includes the item management system 10. The item management system 10 transmits, to the progress management system 20, the piece of item information on the item shipped to the construction site. The progress management system 20 transmits the piece of item information received from the item management system 10 to the installation record management system 30. The transmission of the piece of item information received from the item management system 10 to the installation record management system 30 by the progress management system 20 enables the first acquisition unit 34 of the installation record management system 30 to acquire the piece of item information on the item for which the installation task is to be performed at the construction site.

Each of the item management system 10, the progress management system 20, and the installation record management system 30 included in the management system 1 will be described in detail below.

### (2.1) Item management system

The item management system 10 manages inventory statuses of items in the item storage area.

The item management system 10 includes a first processing unit 11, a first communication unit 12, and a first storage 13.

The first processing unit 11 includes, as a main component, a computer system including one or more processors and memory. The processor(s) of the computer system executes a program stored in the memory of the computer system, thereby implementing a function as the first processing unit 11. The program may be stored in the memory, may be provided over a telecommunication network, such as the Internet, or may be provided as a non-transitory recording medium, such as a memory card, in which the program has been stored.

The first processing unit 11 has functions as, for example, a reception and shipment information acquiring unit 14, an inventory management unit 15, and an item information output 16. Note that the reception and shipment information acquiring unit 14, the inventory management unit 15, and the item information output 16 merely show the functions implemented by the first processing unit 11 but do not necessarily represent tangible components.

The reception and shipment information acquiring unit 14 acquires pieces of item information on items received in the item storage area and pieces of item information on items shipped out of the item storage area. For example, items to be stored in the item storage area each has a medium such as a barcode or an IC tag attached thereto, and the medium has a piece of item information recorded thereon. The reception and shipment information acquiring unit 14 includes a reading device such as a barcode reader or an IC tag reader that reads the piece of item information from the medium. For example, when an item is received in the item storage area, the reception and shipment information acquiring unit 14 reads a piece of item information from a medium attached to the item by using the reading device, thereby acquiring, as a piece of reception information, the piece of item information on the item received in the item storage area. Moreover, for example, when an item is shipped out of the item storage area, the reception and shipment information acquiring unit 14 reads a piece of item information from a medium attached to the item by using the reading device, thereby acquiring, as a piece of shipment information, the piece of item information on the item shipped out of the item storage area. Note that the reception and shipment information acquiring unit 14 may analyze an image obtained by capturing, with a camera, each image of a corresponding one of the items received in the item storage area or a corresponding one of the items shipped out of the storage area to acquire a piece of item information on the corresponding one of the items.

The inventory management unit 15 manages, based on pieces of reception information and pieces of shipment information acquired by the reception and shipment information acquiring unit 14, storage statuses of a plurality of types of items stored in the item storage area. The inventory management unit 15 causes the first storage 13 to store pieces of item storage information on the storage statuses of the plurality of types of items stored in the item storage area. Each piece of item storage information can include, for example, at least one of the item name, the item number, the manufacturing number, a piece of manufacturing timing information representing a manufacturing timing, a piece of lot information representing a manufacturing lot, a piece of manufacturing place information representing a manufacturing place, receiving date and time, or shipping date and time of a corresponding one of the plurality of types of items stored in the item storage area.

Moreover, when the inventory management unit 15 receives a piece of order instruction information of instructing ordering an item necessary in an installation task from the progress management system 20, the inventory management unit 15 orders, based on the piece of order instruction information and the inventory statuses of the items, the necessary item from a manufacturer or supplier.

Moreover, when the inventory management unit 15 receives a piece of shipping instruction information from the progress management system 20, the inventory management unit 15 instructs a worker to ship the item instructed by the piece of shipping instruction information.

For example, when the reception and shipment information acquiring unit 14 acquires a piece of reception information or a piece of shipment information on an item, the item information output 16 causes the first communication unit 12 to transmit, to the progress management system 20, a piece of item information at least including the manufacturing number of the item thus received or the item to be shipped. Note that the piece of item information output from the item information output 16 may further include a piece of information on the item name and item number of the item. Moreover, the piece of item information may further include at least one of the piece of manufacturing timing information on a manufacturing timing of the item, the piece of lot information on a manufacturing lot of the item, or the piece of manufacturing place information on a manufacturing place of the item. Note that the piece of manufacturing timing information is a piece of information on the year, the year and month, or the year, month, and date of the manufacturing of the item. The piece of manufacturing place information may be a piece of information representing a factory where the item was manufactured or may be a piece of information representing a manufacturing line in the factory.

The first communication unit 12 includes a communication interface for communication with the progress management system 20. The first communication unit 12 communicates with the progress management system 20, for example, via a network NT such as the Internet.

The first storage 13 includes at least one type of memory selected from the group consisting of, for example, read only memory (ROM), random access memory (RAM), and electrically erasable programmable read only memory (EEPROM). The first storage 13 stores the pieces of item storage information, and the pieces of reception information and pieces of shipment information acquired by the reception and shipment information acquiring unit 14, and the like.

### (2.2) Progress Management System

The progress management system 20 manages the state of progress in a plurality of installation tasks performed at the construction site.

The progress management system 20 includes a second processing unit 21, a second communication unit 22, and a second storage 23.

The second processing unit 21 includes, as a main component, a computer system including one or more processors and memory. The processor(s) of the computer system executes a program stored in the memory of the computer system, thereby implementing a function as the second processing unit 21. The program may be stored in the memory, may be provided over a telecommunication network, such as the Internet, or may be provided as a non-transitory recording medium, such as a memory card, in which the program has been stored.

The second processing unit 21 has a function as, for example, a progress management unit 24. Note that the progress management unit 24 merely shows the function implemented by the second processing unit 21 but does not necessarily represent a tangible component.

The progress management unit 24 manages, based on pieces of task information on the plurality of installation tasks to be performed at the construction site, manages the state of progress in the plurality of installation tasks. Each piece of task information can include: a piece of installation schedule information on scheduled installation date and time and installation execution date and time of a corresponding one of the plurality of installation tasks; and a piece of task contents information on an item used in the corresponding one of the plurality of installation tasks and on contents of the task in which the item is used.

The progress management unit 24 manages, based on the pieces of installation information received from the installation record management system 30, the state of progress in the plurality of installation tasks. The progress management unit 24 outputs, based on the state of progress in the plurality of installation tasks, the piece of order instruction information to the item management system 10. The piece of order instruction information instructs ordering an item necessary in an installation task to be performed. Further, when the progress management unit 24 receives, from the item management system 10, a piece of reception information representing reception of the item necessary in the installation task to be performed, the progress management unit 24 outputs the piece of shipping instruction information to the item management system 10 before the installation task is performed. The shipping instruction information instructs shipping the item. Furthermore, when the progress management unit 24 receives, from the item management system 10, a piece of shipment information representing that the item necessary in the installation task to be performed has been shipped, the progress management unit 24 outputs a task instruction which instructs execution of the installation task, for example, to a portable terminal carried by a worker who performs the installation task at the construction site.

The second communication unit 22 includes a communication interface for communication with the item management system 10 and the installation record management system 30. The second communication unit 22 communicates with the item management system 10 and the installation record management system 30, for example, via a network NT such as the Internet.

The second storage 23 includes at least one type of memory selected from the group consisting of, for example, ROM, RAM, and EEPROM. The second storage 23 stores, for example, the pieces of task information on the plurality of installation tasks to be performed at the construction site, the pieces of item information on the plurality of items used in the plurality of installation tasks, and the pieces of installation information on the installation statuses of the plurality of items.

### (2.3) Installation Record Management System

The installation record management system 30 manages installation records of the plurality of installation tasks performed at the construction site.

The installation record management system 30 includes a third processing unit 31, a third communication unit 32, and the third storage 33.

The third processing unit 31 includes, as a main component, a computer system including one or more processors and memory. The processor(s) of the computer system executes a program stored in the memory of the computer system, thereby implementing a function as the third processing unit 31. The program may be stored in the memory, may be provided over a telecommunication network, such as the Internet, or may be provided as a non-transitory recording medium, such as a memory card, in which the program has been stored.

The third processing unit 31 has functions as, for example, a first acquisition unit 34, a second acquisition unit 35, and an output 36. Note that the first acquisition unit 34, the second acquisition unit 35, and the output 36 merely show the functions implemented by the third processing unit 31 but do not necessarily represent tangible components.

The first acquisition unit 34 acquires, from the item management system 10, a piece of item information at least including the manufacturing number of an item to be shipped to the construction site. Note that in the present embodiment, the first acquisition unit 34 acquires the piece of item information from the item management system 10 via the progress management system 20.

The second acquisition unit 35 acquires a piece of installation information on an installation status, at the construction site, of the item shipped to the construction site. The second acquisition unit 35 includes a communication module that communicates with, for example, an electric tool which a worker uses to perform installation tasks at the construction site. The second acquisition unit 35 receives a piece of tool use information on the usage of the electric tool from the electric tool, and based on the piece of tool use information, the second acquisition unit 35 acquires the piece of installation information on the installation task.

In this embodiment, the piece of installation information may include a piece of information as to whether or not the installation task using the item has been performed, or may include the piece of information on the task contents of the installation task performed by using the item. For example, when the installation task is a tightening task of a screw, the second acquisition unit 35 may acquire, from the electric tool, the piece of tool use information including a tightening torque of the screw, for example.

Moreover, the piece of information on the task contents of the installation task may include, for example, a piece of place information on a place where the installation task for the item has been performed. The electric tool has a positioning function using, for example, a satellite positioning system such as a global positioning system (GPS). When the electric tool executes the installation task on the item, the electric tool transmits a piece of information representing the execution of the installation task and the piece of place information on the installation place to the installation record management system 30. Thus, the piece of installation information preferably further includes the piece of place information on the place where the installation task for the item has been performed, and the user of the installation record management system 30 can grasp, based on the piece of place information included in the piece of installation information, the place where the installation task for the item has been performed.

Moreover, the piece of information on the task contents of the installation task may further include at least one of: a piece of installation timing information on an installation timing at which the installation task of the item has been performed; or a piece of worker information on a worker who has performed the installation task of the item. The second acquisition unit 35 determines, based on a time point at which the second acquisition unit 35 receives the piece of tool use information from the electric tool, the installation timing at which the installation task has been performed, and the second acquisition unit 35 generates the piece of installation timing information on the installation timing. Moreover, the second acquisition unit 35 communicates with, for example, the portable terminal carried by a worker, thereby acquiring the piece of worker information, such as, the name or ID number of the worker, from the portable terminal. As described above, the piece of installation information preferably further includes the piece of installation timing information on the installation timing at which the installation task for the item has been performed or the piece of worker information on the worker who has performed the installation task for the item. Thus, the user of the installation record management system 30 can grasp, based on the piece of installation information, the installation timing at which the installation task of the item has been performed or the worker who has performed the installation task of the item.

The third communication unit 32 includes a communication interface for communication with the progress management system 20. The third communication unit 32 communicates with the progress management system 20, for example, via a network NT such as the Internet.

The third storage 33 includes at least one type of memory selected from the group consisting of, for example, ROM, RAM, and EEPROM. The third storage 33 stores, for example, the pieces of installation information on the installation tasks performed at the construction site and the pieces of item information on the items which are targets of the installation tasks.

### (2.4) Explanation of Operation

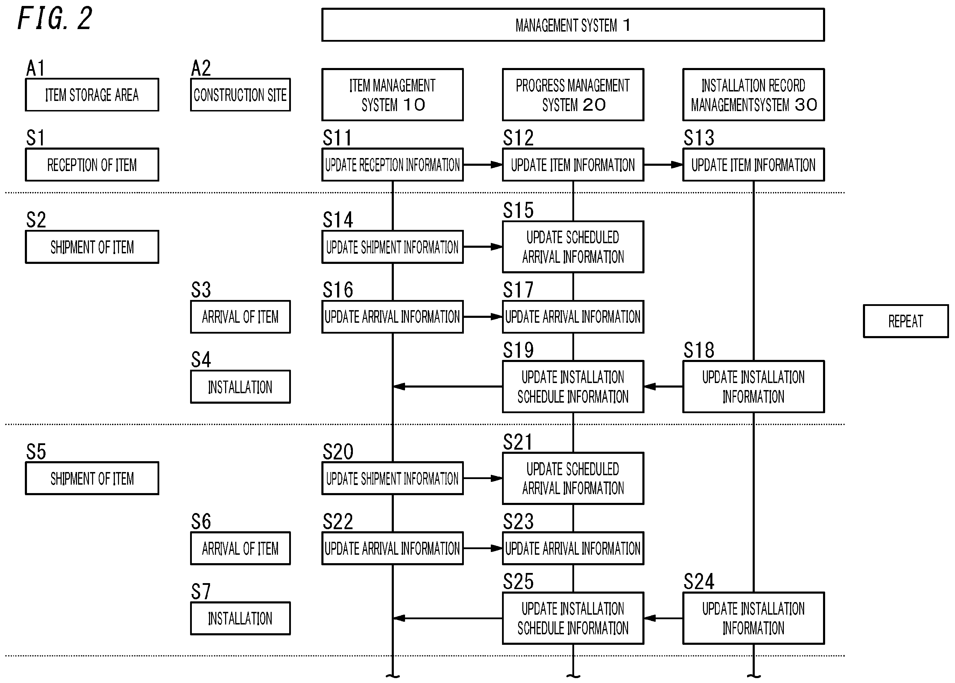

With reference to, for example, FIG. 2, operation of the management system 1 including the installation task management system 30 of the present embodiment will be described. Note that in the sequence diagram shown in FIG. 2, steps S1 to S7 represent events that take place in an item storage area A1 and a construction site A2. Moreover, in the sequence diagram shown in FIG. 2, steps S11 to S24 represent operation performed by the item management system 10, the progress management system 20, and the installation record management system 30. Moreover, the sequence diagram shown in FIG. 2 is a mere example of the installation record management method according to the present embodiment, and the order of the processes may accordingly be changed, or a process(es) may accordingly be added or omitted.

The following description explains operation of the management system 1 when an item received in the item storage area A1 from a manufacturer or supplier of the item is shipped to the construction site A2 and an installation task for the item is performed at the construction site A2.

When the item management system 10 which has received an order instruction from the progress management system 30 orders an item necessary in an installation task at the construction site A2 from a manufacturer or supplier of the item, the item thus ordered is received in the item storage area A1 (step S1).

When the reception and shipment information acquiring unit 14 of the item management system 10 acquires a piece of reception information on the item thus received, the item management system 10 updates the piece of reception information on the item (step S11) and causes the first communication unit 12 to transmit, to the progress management system 20, a piece of item information on the item thus received. **In** this embodiment, the piece of item information includes the manufacturing number, the piece of manufacturing timing information, etc. of the item.

When the progress management system 20 receives the piece of item information from the item management system 10, the progress management system 20 updates the piece of item information on the item thus received in the item storage area A1 (step S12) and causes the second communication unit 22 to transmit the piece of item information to the installation record management system 30.

When the installation record management system 30 receives, from the progress management system 20, the piece of item information on the item thus received, the installation record management system 30 updates the piece of item information on the item received in the item storage area A1 (step S13).

In accordance with the state of progress in a plurality of installation tasks at the construction site, the progress management system 20 causes the second communication unit 22 to transmit, to the item management system 10, a piece of shipping instruction information which instructs shipping of an item to be used in one of the installation tasks which is to be performed.

When the item management system 10 receives the piece of shipping instruction information from the progress management system 20, the item management system 10 ships the item specified based on the piece of shipping instruction information to the construction site A2 on a specified date and time (step S2). At this time, the inventory management unit 15 of the item management system 10 updates the inventory status of the item and updates a piece of shipment information on the item (step S14), and the item information output 16 causes the first communication unit 12 to transmit the piece of shipment information on the item to the progress management system 20.

The progress management unit 24 of the progress management system 20 updates, based on the piece of shipment information received from the item management system 10, a piece of scheduled arrival information on the item (step S15).

Moreover, when the item arrives at the construction site A2 (step S3), the item management system 10 receives a piece of information representing the arrival of the item from a communication device that performs a receipt process of the item at the construction site A2, and the item management system 10 updates a piece of arrival information on the item (step S16). At this time, the item information output 16 of the item management system 10 causes the first communication unit 12 to transmit the piece of arrival information on the item to the progress management system 20 (step S17).

When the progress management system 20 receives the piece of arrival information on the item, the progress management system 20 causes the second communication unit 22 to transmit, to the installation record management system 30, a piece of item information on the item on which the piece of arrival information has been received in step S17 and a piece of task execution information instructing execution of the installation task. When the installation record management system 30 receives the piece of item information and the piece of task execution information, the installation record management system 30 transmits a piece of task instruction information which instructs a portable terminal carried by a worker to start the installation task.

When the worker performs, based on the piece of task instruction information transmitted to the portable terminal, the installation task for the item by using, for example, an electric tool (step S4), the electric tool transmits a piece of information representing execution of the task to the installation record management system 30.

When the installation record management system 30 receives the piece of information representing the execution of the task from the electric tool, the second acquisition unit 35 updates a piece of installation information (step S18) and stores the piece of item information and the piece of installation information on the item in the third storage 33 such that the piece of item information and the piece of installation information correspond to each other. Moreover, the installation record management system 30 causes the third communication unit 32 to transmit, to the progress management system 20, the piece of item information and the piece of installation information on the item for which the installation task has been performed.

When the progress management system 20 receives, from the installation record management system 30, the piece of item information and the piece of installation information on the item for which the installation task has been performed, the progress management system 20 updates a piece of installation schedule information at the construction site (step S19). The progress management system 20 outputs, based on the piece of installation schedule information, a piece of shipping instruction information to the item management system 10. The piece of shipping instruction information instructs shipping of an item necessary in an installation task to be performed.

Thereafter, each time the installation task of one item is performed, the management system 1 repeats the processes in steps S14 to S18. Note that steps S5 to S7 are similar events to steps S2 to S4, respectively, and step S20 to S24 are similar processes to steps S14 to S18, respectively, and therefore, the description thereof is omitted.

Thus, pieces of item information and pieces of installation information on the items for which the installation tasks have been performed at the construction site A2 are stored in the third storage 33 of the installation record management system 30 and are stored in the second storage 23 of the progress management system 20. Thus, if an item for which the installation task has been performed at the construction site A2 may be recalled, then the user can easily grasp, based on the pieces of information stored in the third storage 33 of the installation record management system 30, the installation place of the item thus recalled. Note that each piece of item information may include the piece of manufacturing timing information, the piece of lot information, the piece of manufacturing place information, etc. of a corresponding one of the items, and the user can easily grasp, based on these pieces of information, the installation place of the recalled item.

### (3) Variations

The embodiment described above is a mere example of various embodiments of the present disclosure. Various modifications may be made to the embodiment described above depending on design or the like as long as the object of the present disclosure is achieved. Also, functions similar to the installation record management system 30 may also be implemented as, for example, an installation record management method, a computer program, or a non-transitory storage medium on which the computer program is stored. An installation record management method according to an aspect includes a first acquisition process, a second acquisition process, and a storage process. The item management system 10 manages inventory statuses of a plurality of types of items used in a plurality of installation tasks at a construction site. The first acquisition process includes acquiring, from the item management system 10, a piece of item information at least including the manufacturing number of an item which is included in the plurality of types of items and which is to be shipped to the construction site. The second acquisition process includes acquiring a piece of installation information on an installation status of the item shipped to the construction site. The storage process includes storing the piece of item information acquired in the first acquisition process and the piece of installation information acquired in the second acquisition process such that the piece of item information and the piece of installation information correspond to each other. A (computer) program according to an aspect is a program configured to cause a computer system to execute the installation record management method.

Variations of the embodiment are enumerated below. Any of the variations to be described below may be combined as appropriate.

The installation record management system 30 or an execution subject of the installation record management method in the present disclosure includes a computer system. The computer system may include a processor and memory as principal hardware components thereof. The processor executes a program stored in the memory of the computer system, thereby implementing a function as the installation record management system 30 or an execution subject of the installation record management method in the present disclosure. The program may be stored in the memory of the computer system in advance, may be provided over a telecommunication network, or may be distributed after having been recorded in some non-transitory recording medium, such as a memory card, an optical disc, or a hard disk drive, which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the management system 1 includes the item management system 10, the progress management system 20, and the installation record management system 30. However, the management system 1 may further include a component(s) other than the item management system 10, the progress management system 20, and the installation record management system 30.

The management system 1 includes the item management system 10, the progress management system 20, and the installation record management system 30, but two or more of the item management system 10, the progress management system 20, and the installation record management system 30 may be implemented by a single system. Further, all of the item management system 10, the progress management system 20, and the installation record management system 30 may be implemented by a single system.

Moreover, some functions of the item management system 10, the progress management system 20, and the installation record management system 30 may be implemented by, for example, cloud computing.

### (Summary)

The embodiment and the like explained above disclose the following aspects.

An installation record management system (30) of a first aspect includes a first acquisition unit (34), a second acquisition unit (35), and a storage (33). An item management system (10) is configured to manage inventory statuses of a plurality of types of items used in a plurality of installation tasks at a construction site. The first acquisition unit (34) is configured to acquire, from the item management system (10), a piece of item information at least including a manufacturing number of an item which is included in the plurality of types of items and which is to be shipped to the construction site. The second acquisition unit (35) is configured to acquire a piece of installation information on an installation status, at the construction site, of the item shipped to the construction site. The storage (33) is configured to store the piece of item information acquired by the first acquisition unit (34) and the piece of installation information acquired by the second acquisition unit (35) such that the piece of item information and the piece of installation information correspond to each other.

This aspect enables manufacturing numbers and installation statuses of the items used in the installation tasks at the construction site to be managed. For example, when a manufacturing failure or the like is found in an item after the installation of the item, the installation status of the item having the manufacturing failure can be grasped based on pieces of item information and pieces of installation information stored in the storage (33) of the installation record management system (30). This provides a user of the installation record management system (30) with the advantages that the user can check the installation status, at the construction site, of the item having the manufacturing failure or the like, and that the user can take an action to, for example, replace the item if the item has been installed at the construction site.

In an installation record management system (30) of a second aspect referring to the first aspect, the piece of installation information further includes a piece of place information on a place where an installation task of the installation tasks which is for the item has been performed.

This aspect allows the user of the installation record management system (30) to grasp, based on the piece of place information, the place where the installation task for the item has been performed.

In an installation record management system (30) of a third aspect referring to the first or second aspect, the piece of installation information further includes at least one of a piece of installation timing information on an installation timing at which the an installation task of the installation tasks which is for the item has been performed or a piece of worker information on a worker who has performed the installation task for the item.

This aspect allows the user of the installation record management system (30) to grasp, based on the piece of installation timing information or the piece of worker information, the installation status of the item in further detail.

In an installation record management system (30) of a fourth aspect referring to any one of the first to third aspects, the piece of item information further includes at least one of a piece of manufacturing timing information on a manufacturing timing of the item, a piece of lot information on a manufacturing lot of the item, or a piece of manufacturing place information on a manufacturing place of the item.

With this aspect, the user of the installation record management system (30) can use the piece of manufacturing timing information, the piece of manufacturing lot information, or the piece of manufacturing place information to search for the item.

A management system (1) of a fifth aspect includes: the installation record management system (30) of any one of the first to fourth aspects; and a progress management system (20) configured to manage a state of progress in the plurality of installation tasks at the construction site. The installation record management system (30) is configured to, upon completion of an installation task of the plurality of installation tasks which is for the item shipped to the construction site, transmit, to the progress management system (20), the piece of item information and the piece of installation information on the item for which the installation task has been completed. The progress management system (20) is configured to record the piece of item information and the piece of installation information received from the installation record management system (30) such that the piece of item information and the piece of installation information correspond to each other.

In this aspect, the progress management system (20) and the installation record management system (30) share the piece of item information and the piece of installation information, and therefore, this aspect allows a user of the progress management system (20) to grasp the piece of item information and the piece of installation information on the item installed at the construction site.

A management system (1) of a sixth aspect referring to the fifth aspect further includes the item management system (10). The item management system (10) is configured to transmit, to the progress management system (20), the piece of item information on the item shipped to the construction site. The progress management system (20) is configured to transmit, to the installation record management system (30), the piece of item information received from the item management system (10).

This aspect enables the installation record management system (30) to receive, from the progress management system (20) configured to manage the state of progress in the installation tasks, the piece of item information on the item used in one of the installation tasks.

An installation record management method of a seventh aspect includes a first acquisition process, a second acquisition process, and a storage process. An item management system (10) is configured to manage inventory statuses of a plurality of types of items used in a plurality of installation tasks at a construction site. The first acquisition process includes acquiring, from the item management system (10), a piece of item information at least including a manufacturing number of an item which is included in the plurality of types of items and which is to be shipped to the construction site. The second acquisition process includes acquiring a piece of installation information on an installation status of the item shipped to the construction site. The storage process includes storing the piece of item information acquired in the first acquisition process and the piece of installation information acquired in the second acquisition process such that the piece of item information and the piece of installation information correspond to each other.

This aspect enables manufacturing numbers and installation statuses of the items used in the installation tasks at the construction site to be managed.

A program of an eighth aspect is a program configured to cause a computer system to execute the installation record management method of the seventh aspect.

This aspect enables manufacturing numbers and installation statuses of the items used in the installation tasks at the construction site to be managed.

The aspects should not be construed as limiting. Various configurations (including variations) of the installation record management system (30) of the embodiment can embodied by, for example, an installation record management method, a (computer)program, or a non-transitory recording medium in which a program has been stored.

The configurations of the second to fourth aspects are not essential configurations for the installation record management system (30) and are thus accordingly omittable. Moreover, the configuration of the sixth aspect is not an essential configuration for the management system (1) and is thus accordingly omittable.

### Reference Signs List

- 1: Management System
- 10: Item management system
- 20: Progress Management System
- 30: Installation Record Management System
- 33: Third Storage (Storage)
- 34: First Acquisition Unit
- 35: Second Acquisition Unit

## Claims

1. An installation record management system comprising:
a first acquisition unit configured to acquire, from an item management system configured to manage inventory statuses of a plurality of types of items used in a plurality of installation tasks at a construction site, a piece of item information at least including a manufacturing number of an item which is included in the plurality of types of items and which is to be shipped to the construction site;
a second acquisition unit configured to acquire a piece of installation information on an installation status, at the construction site, of the item shipped to the construction site; and
a storage configured to store the piece of item information acquired by the first acquisition unit and the piece of installation information acquired by the second acquisition unit such that the piece of item information and the piece of installation information correspond to each other.

2. The installation record management system of claim 1, wherein
the piece of installation information further includes a piece of place information on a place where an installation task of the installation tasks which is for the item has been performed.

3. The installation record management system of claim 1 or 2, wherein
the piece of installation information further includes at least one of
a piece of installation timing information on an installation timing at which an installation task of the installation tasks which is for the item has been performed or
a piece of worker information on a worker who has performed the installation task for the item.

4. The installation record management system of any one of claims 1 to 3, wherein
the piece of item information further includes at least one of
a piece of manufacturing timing information on a manufacturing timing of the item,
a piece of lot information on a manufacturing lot of the item, or
a piece of manufacturing place information on a manufacturing place of the item.

5. A management system comprising:
the installation record management system of any one of claims 1 to 4; and
a progress management system configured to manage a state of progress in the plurality of installation tasks at the construction site,
the installation record management system being configured to, upon completion of an installation task of the installation tasks which is for the item shipped to the construction site, transmit, to the progress management system, the piece of item information and the piece of installation information on the item for which the installation task has been completed,
the progress management system being configured to record the piece of item information and the piece of installation information received from the installation record management system such that the piece of item information and the piece of installation information correspond to each other.

6. The management system of claim 5, further includes the item management system, wherein
the item management system is configured to transmit, to the progress management system, the piece of item information on the item shipped to the construction site, and
the progress management system is configured to transmit, to the installation record management system, the piece of item information received from the item management system.

7. An installation record management method comprising:
a first acquisition process of acquiring, from an item management system configured to manage inventory statuses of a plurality of types of items used in a plurality of installation tasks at a construction site, a piece of item information at least including a manufacturing number of an item which is included in the plurality of types of items and which is to be shipped to the construction site;
a second acquisition process of acquiring a piece of installation information on an installation status of the item shipped to the construction site; and
a storage process of storing the piece of item information acquired in the first acquisition process and the piece of installation information acquired in the second acquisition process such that the piece of item information and the piece of installation information correspond to each other.

8. A program configured to cause a computer system to execute the installation record management method of claim 7.
